# FASCICULE DE BREVET EUROPEEN

(11) **EP 1 871 206 B1**
(45) Date de publication et mention de la délivrance du brevet: **22.07.2009**
(21) Numéro de dépôt: 06743577.6
(22) Date de dépôt: 15.03.2006
(51) Int. Cl.: A47J 45/06, A47J 36/06

(54) **COUVERCLE D'ARTICLE CULINAIRE**
DECKEL FÜR EINE KOCHVORRICHTUNG
COOKING APPLIANCE LID

(30) Priorité: 18.03.2005 FR 0502735
(43) Date de publication de la demande: 02.01.2008
(73) Titulaire: SEB SA, 69130 Ecully (FR)
(72) Inventeur: CUILLERY, Pascal, F-74210 Faverges (FR)
(74) Mandataire: Gendron, Vincent Christian
(86) Numéro de dépôt international: PCT/FR2006/000577
(87) Numéro de publication internationale: WO 2006/097630

(56) Documents cités:
- FR-A- 1 203 589
- GB-A- 2 142 868
- US-A- 1 717 538
- US-A- 5 154 114

## Description

La présente invention se rapporte à un couvercle d'article culinaire, par exemple un couvercle de casserole, de sauteuse, de poêle...

De façon classique, un couvercle présente un capot adapté à recouvrir l'article culinaire, et un organe de préhension faisant saillie du capot et permettant la saisie du couvercle. Cependant, du fait de sa proéminence, l'organe de préhension empêche d'avoir un empilement stable de plusieurs couvercles similaires.

Dans le but de remédier à ce problème, on connaît un couvercle du type dont l'organe de préhension peut passer d'un état d'empilement dans lequel il ne gêne pas l'empilement du couvercle, à un état de préhension dans lequel il présente une surface de préhension dégagée du couvercle.

Ainsi il existe, notamment pour les articles de camping, un couvercle dont l'organe de préhension est formé d'une anse reliée de façon pivotante à un socle fixé au centre du couvercle. Comme l'ance pivote librement, quand le couvercle repose à plat, elle est couchée contre le capot, et est donc, d'une part, portée à haute température (comme le capot) quand le couvercle recouvre un article culinaire disposé sur un feu, et, d'autre part, difficilement saisissable par un utilisateur (et cela d'autant plus qu'elle est chaude).

Il existe également, d'après le document US 5 154 114, un couvercle comportant deux anses fixées à la périphérie du couvercle par un dispositif d'articulation conférant à chaque anse deux positions stables : la position d'empilement et une position de transport, sensiblement perpendiculaire à la position d'empilement. Du fait du dispositif d'articulation, il est nécessaire d'employer les deux mains pour faire passer une anse d'une position à l'autre (avec donc toujours des risques de brûlures quand le capot est chaud). De plus si la position de transport est relativement verrouillée, il faut à nouveau utiliser les deux mains pour se replacer en position d'empilement, ce qui est long et laborieux.

La présente invention vise à réaliser un couvercle palliant les inconvénients précités.

Selon l'invention, le couvercle du type précité comprend un moyen élastique entraînant l'organe de préhension de son état d'empilement à son état de préhension.

Ainsi, par défaut, notamment quand aucun couvercle ne repose sur l'organe de préhension, ce dernier est dans son état de préhension, état dans laquelle la surface de préhension de l'organe de préhension est dégagée du capot. De ce fait, d'une part, le couvercle peut être facilement saisi, et, d'autre part, la surface de préhension n'est pas chauffée par le capot par conduction.

D'autres avantages et particularités de la présente invention ressortiront de la description du mode de réalisation donné à titre d'exemple non limitatif et illustré par les dessins annexés.
La figure 1 est une vue en perspective éclatée d'un organe de préhension d'un couvercle conforme à la présente invention,
La figure 2 est une vue en perspective d'un volet de l'organe de préhension,
La figure 3 est une vue en perspective d'un couvercle avec les volets de l'organe de préhension en position de préhension,
La figure 4 est une vue en coupe d'un empilement de deux couvercles, les volets de l'organe de préhension du couvercle inférieur étant en position d'empilement, ceux de l'organe de préhension du couvercle supérieur étant en position de préhension, et
La figure 5 est une vue en perspective d'un couvercle avec les volets de l'organe de préhension en position de transport.

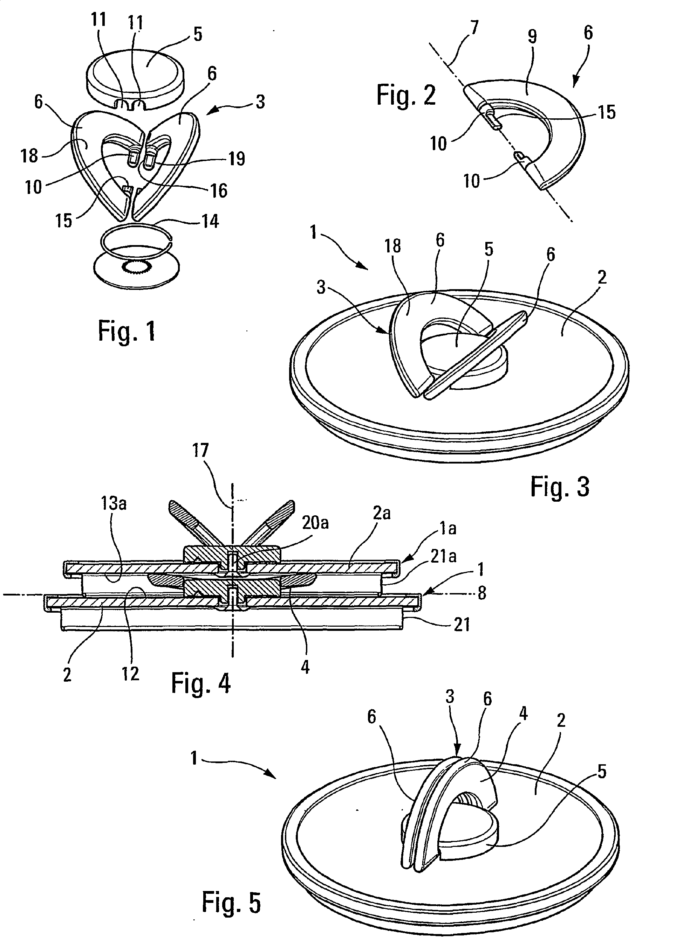

Comme on peut le voir aux figures 3 à 5, un couvercle 1 pour article culinaire comprend un capot 2 qui est adapté à recouvrir l'article culinaire, et un organe de préhension 3 qui est adapté à permettre la préhension du couvercle 1. L'organe de préhension 3 est transformable et comprend au moins deux états : un état d'empilement dans lequel il ne gêne pas l'empilement du couvercle avec un autre couvercle 1a, comme on peut le voir à la figure 4, et un état de préhension dans laquelle il présente une surface de préhension 4 dégagée du couvercle 1 (et plus précisément, dégagée du capot 2), comme on peut le voir aux figures 3 et 4.

Dans le présent mode de réalisation, l'organe de préhension 3 comprend un socle 5 qui est fixé au capot 2 (ici, au centre du capot 2), et au moins un volet 6 (ici deux volets 6) qui porte la surface de préhension 4 de l'organe de préhension 3, chaque volet 6 étant mobile par rapport au socle 5 entre au moins une position d'empilement et une position de préhension dans laquelle la surface de préhension 4 est sans contact avec le capot 2, ces positions correspondant, respectivement, aux états d'empilement et de préhension de l'organe de préhension 3.

Chaque volet 6 est monté rotatif par rapport au socle 5 selon un axe de rotation 7 qui est parallèle au plan tangent 8 au capot 2 au niveau du socle 5, les deux axes de rotation 7 des volets 6 étant parallèles l'un à l'autre. Afin de permettre cette articulation, chaque volet 6 comprend une anse 9 de forme semi-circulaire, et deux arbres 10 diamétralement opposés l'un à l'autre s'étendant radialement vers l'intérieur de l'anse 9. En parallèle, le socle 5 comprend, pour chaque volet 6, deux ouvertures 11 qui se font face et qui sont adaptées à recevoir, chacune un arbre 10 du volet 6.

Dans le présent mode de réalisation, pour des couvercles 1 dont les capots 2 ont un diamètre extérieur compris entre 140 et 280 mm, le socle 5 présente une forme cylindrique dont le diamètre extérieur est compris entre 40 à 50 mm, de préférence 45 mm et ayant une épaisseur comprise entre 5 et 10 mm, de préférence 8 mm, chaque volet 6 (plus exactement chaque anse 9) présente une forme de demi-couronne avec un diamètre intérieur correspondant au diamètre du socle 5 et un diamètre extérieur compris entre 70 et 90 mm, de préférence 80 mm et dont l'épaisseur est comprise entre 4 et 8 mm.

Comme on peut le voir à la figure 4, quand un volet 6 est en position d'empilement, la surface de préhension 4 est tournée contre le capot 2. En fonction de la forme du capot 2, quand il est en position d'empilement, le volet 6 peut être orienté d'un angle positif (orienté vers le haut) inférieur à 10°, plus fréquemment parallèle au plan tangent 8 ou même orienté avec un léger angle négatif (orienté vers le bas), c'est à dire selon un plan compris entre le plan tangent 8 et le plan du capot 2.

La faible épaisseur de l'organe de préhension 3 dans son état d'empilement fait qu'il n'interfère pas avec le capot 2a du couvercle la reposant sur le couvercle 1 qui le porte. L'épaisseur de l'organe de préhension 3 en état d'empilement est inférieure à la distance séparant, au niveau de l'organe de préhension 3, la surface supérieure 12 du capot 2 du couvercle 1 portant cet organe 3 de la vis de fixation 20a de l'organe de préhension 3 du couvercle la.

Dans le présent mode de réalisation, les épaisseurs du socle 5 et de chaque volet 6 sont inférieures aux distances séparant, au niveau de ces différents éléments 5,6, la surface supérieure 12 du capot 2 du couvercle 1 portant ces éléments 5,6 de la surface inférieure 13a du capot 2a du couvercle 1a posé sur le premier couvercle 1, en tenant compte, pour les volets 6, de leur orientation.

La différence de niveau entre les capots inférieur 2 et supérieur 2a est principalement imposé par la hauteur d'un jonc périphérique circulaire 21,21a bordant chacun des capots 2,2a plans ou légèrement bombés.

Conformément à la présente invention, le couvercle 1 comprend un moyen élastique 14 qui entraîne l'organe de préhension 3 de son état d'empilement à son état de préhension. De ce fait, quand un couvercle 1 est disposé sur un ustensile culinaire posé sur un feu, du fait de la présence du moyen élastique 14, l'organe de préhension 3 est dans son état de préhension et sa surface de préhension 4, dégagée du capot 2, n'est pas chauffée et peut être facilement saisie par un utilisateur.

L'élasticité du moyen élastique 14 est telle que le poids d'un objet tel qu'un couvercle d'article culinaire posé sur l'organe de préhension 3 entraîne ce dernier de son état de préhension à son état d'empilement.

Comme on peut le voir aux figures 3 et 4, quand un volet 6 est dans sa position de préhension, il est incliné par rapport au plan tangent 8 de façon à rendre accessible surface de préhension 4. Afin de permettre une préhension aisée, de préférence, chaque volet 6 en position de préhension est orienté selon un plan faisant au moins 30° avec le plan tangent 8 (ici, l'orientation est sensiblement égale à 45°).

Dans le présent mode de réalisation, le moyen élastique 14 est formé par un ressort 14 qui est logé dans l'organe de préhension 3 (ici, dans le socle 5). Chaque arbre 10 de chaque volet 6 comprend une surface d'appui 15 sur laquelle repose le ressort 14, la surface d'appui 15 faisant, avec la surface définie par l'anse 9, un angle qui est égal à l'angle du volet 6 en position de préhension avec le plan tangent 8, le ressort 14 étant disposé selon le plan tangent 8. Ainsi, quand les volets 6 sont dans leur position d'empilement, le ressort 14 appuie sur des premiers bords axiaux 16 des arbres 10 et entraîne chaque arbre 10 jusqu'à ce qu'il prenne appui sur l'ensemble de la surface d'appui 15.

Par ailleurs, dans le présent mode de réalisation, chaque volet 6 en position de préhension est orienté selon un plan faisant au plus 60° avec le plan tangent 8, et est mobile au-delà de cette position de préhension, jusque dans une position de transport dans laquelle il s'étend selon un plan sensiblement parallèle au plan normal 17 au plan tangent 8.

Dans le présent mode de réalisation, quand ils sont en position de transport, les deux volets 6 sont en butée l'un contre l'autre par l'intermédiaire de leur surface de butée 18 qui est à l'opposée de leur surface de préhension 4.

Quand ils sont dans leur position de transport, les volets 6 sont entraînés par le moyen élastique 14 vers leur position de préhension : le ressort 14 s'appuie en effet sur des seconds bords axiaux 19 des arbres 10 et entraîne chaque arbre 10 jusqu'à ce qu'il prenne appui sur l'ensemble de la surface d'appui 15.

Afin d'améliorer la tenue du couvercle 1, l'organe de préhension 3 est conformé de sorte que les deux volets 6 en position de transport se comportent comme une pièce fixe (ou quasiment fixe) par rapport au capot 2, les deux volets 6 ne pouvant coulisser l'un contre l'autre.

A cet effet, dans le présent mode de réalisation, la distance entre les deux axes de rotation 7 correspond sensiblement à l'épaisseur de chaque volet 6, de sorte que, quand les deux volets 6 sont en butée l'un contre l'autre, ils ne peuvent pivoter par rapport au socle 5 que d'au plus 10° de chaque côté du plan normal 17. De même, chaque anse 9 est conformée de sorte que la zone de contact entre les deux surfaces de butée 18 ne se limite pas à un segment de droite mais forme une véritable surface. Le pincement des volets 6 par l'utilisateur génère une force de frottement qui s'oppose au glissement relatif des deux volets 6. Le blocage de ce glissement garantit le blocage en rotation de l'ensemble formé par les deux volets 6 pendant le transport. Egalement afin d'améliorer leur stabilité en position de transport quand ils sont tenus pincés par un utilisateur, la surface de butée 18 de chaque volet 6 présente une rugosité correspondant à la désignation « Charmille 27Ch ».

Ainsi, la prise en main d'un couvercle 1 conforme à la présente invention est particulièrement simple, l'utilisateur n'a qu'à rapprocher par pincement les deux volets 6 en position de préhension (dans laquelle les surfaces de préhension 4 sont naturellement accessibles) jusqu'à ce qu'ils viennent en butée l'un contre l'autre dans une position de transport dans laquelle, quand ils sont tenus par l'utilisateur, ils sont stables. Quand l'utilisateur libère les volets 6, ceux-ci passent alors de leur position de transport à leur position de préhension.

D'autres modes de réalisation différents de celui illustré dans les dessins sont possibles.

Ainsi, l'organe élastique pourrait faire partie intégrante de l'élément portant la surface de préhension, cet élément étant réalisé en une matière elastiquement déformable et étant agencé de manière à être sous contrainte mécanique quand l'organe de préhension est dans son état d'empilement, et sans contrainte mécanique quand l'organe de préhension est dans son état de préhension. Appliqué à un organe de préhension semblable à celui du mode de réalisation illustré, les arbres de chaque volet pourraient être fixés au socle de façon à ce que chaque volet ne présente pas de contrainte mécanique de torsion quand il est en position de préhension.

## Revendications

1. Couvercle (1) d'article culinaire, comprenant un organe de préhension (3) pouvant être au moins dans un état d'empilement dans lequel il ne gêne pas l'empilement du couvercle (1) avec un autre couvercle similaire, et un état de préhension dans lequel il présente une surface de préhension (4) dégagée du couvercle (1), **caractérisé en ce qu'**il comprend un moyen élastique (14) entraînant l'organe de préhension (3) de son état d'empilement à son état de préhension.

2. Couvercle (1) selon la revendication 1, **caractérisé en ce que** l'organe de préhension (3) comprend un socle (5) fixé au capot (2) du couvercle (1), et au moins un volet (6) qui porte la surface de préhension (4) de l'organe de préhension (3) et qui est mobile par rapport au socle (5) entre une position d'empilement et une position de préhension dans laquelle la surface de préhension (4) est sans contact avec le capot (2), ces positions correspondant, respectivement aux états d'empilement et de préhension de l'organe de préhension (3).

3. Couvercle (1) selon la revendication 2, **caractérisé en ce que** chaque volet (6) est monté rotatif par rapport au socle (5) selon un axe de rotation (7) parallèle au plan tangent (8) au capot (2) au niveau du socle (5).

4. Couvercle (1) selon la revendication 3, **caractérisé en ce que** la surface de préhension (4) de chaque volet (6) est tournée contre le capot (2) quand le volet (6) est dans sa position d'empilement.

5. Couvercle (1) selon la revendication 3 ou 4, **caractérisé en ce que** chaque volet (6) en position de préhension est orienté selon un plan faisant avec le plan tangent (8) un angle compris entre 30° et 60°, et de préférence, égale à 45°.

6. Couvercle (1) selon la revendication 5, **caractérisé en ce que** chaque volet (6) est mobile jusque dans une position de transport dans laquelle il est sensiblement normal au plan tangent (8).

7. Couvercle (1) selon l'une des revendications 3 à 6, **caractérisé en ce que** l'organe de préhension (3) comprend deux volets (6), les deux axes de rotation (7) des volets (6) étant parallèles l'un à l'autre.

8. Couvercle (1) selon la revendication 7 dépendante de la revendication 6, **caractérisé en ce que**, en position de transport, les deux volets (6) sont en butée l'un contre l'autre par l'intermédiaire de leur surface de butée (18) opposée à leur surface de préhension (4).

9. Couvercle (1) selon la revendication 8, **caractérisé en ce que** la distance entre les deux axes de rotation (7) est tel que, quand les deux volets (6) sont en butée l'un contre l'autre, ils ne peuvent pivoter par rapport au socle (5) que d'au plus 10° de chaque côté du plan normal (17) au plan tangent (8).

10. Couvercle (1) selon l'une des revendications 1 à 9, **caractérisé en ce que** le moyen élastique (14) est un ressort (14).

## Claims

1. A lid (1) for a cooking appliance, which includes a grasping device (3) that can be in at least a stacked state in which it does not hinder the stacking of the lid (1) with another similar lid, and a grasping state in which it presents a grasping surface (4) clear of the lid (1), **characterised in that** it includes an elastic element (14) for moving the grasping device (3) from its stacked state to its grasping state.

2. The lid (1) according to claim 1, **characterised in that** the grasping device (3) includes a base (5) fixed to the cover (2) of the lid (1), and at least one flap (6) which carries the grasping surface (4) of the grasping device (3) and which is mobile in relation to the base (5) between a stacking position and a grasping position in which the grasping surface (4) is not in contact with the cover (2), with these positions corresponding respectively to the stacking and grasping states of the grasping device (3).

3. The lid (1) according to claim 2, **characterised in that** each flap (6) is mounted to rotate in relation to the base (5) on a rotation axis (7) parallel to the plane (8) tangential to the cover (2) at the level of the base (5),

4. The lid (1) according to claim 3, **characterised in that** the grasping surface (4) of each flap (6) is turned down against the cover (2) when the flap (6) is in its stacking position.

5. The lid (1) according to claim 3 or 4, **characterised in that** each flap (6) in the grasping position is oriented in a plane making an angle of between 30° and 60°, and preferably 45°, with the tangential plane (8).

6. The lid (1) according to claim 5, **characterised in that** each flap (6) is mobile up to a carrying position in which it is more-or-less normal to the tangential plane (8).

7. The lid (1) according to one of claims 3 to 6, **characterised in that** the grasping device (3) includes two flaps (6), with the two rotation axes (7) of the flaps (6) being parallel to each other.

8. The lid (1) according to claim 7, which is dependent on claim 6, **characterised in that**, in the carrying position, the two flaps (6) are pressed against each other by means of their contact surfaces (18), on the other side from their grasping surface (4).

9. The lid (1) according to claim 8, **characterised in that** the distance between the two rotation axes (7) is such that, when the two flaps (6) are pressed against each other, they can pivot in relation to the base (5) only by at most 10° on each side of the plane (17) normal to the tangential plane (8).

10. The lid (1) according to one of claims 1 to 9, **characterised in that** the elastic element (14) is a spring (14).

## Patentansprüche

1. Deckel (1) eines Küchengerätes umfassend ein Greifvorrichtung (3), das mindestens in einem Stapelzustand sein kann, in welchem es das Stapeln eines Deckels auf einem anderen ähnlichen Deckel nicht behindert, und in einem Greifzustand sein kann, in welchem es eine Greiffläche (4) entkoppelt von dem Deckel (1) darbietet, **dadurch gekennzeichnet, dass** er ein elastisches Mittel (14) aufweist, welches die Greifvorrichtung (3) aus seinem Stapelzustand in seinen Greifzustand treibt.

2. Deckel (1) nach Anspruch 1, **dadurch gekennzeichnet, dass** die Greifvorrichtung (3) einen Sockel (5), der an einer Haube (2) des Deckels (1) befestigt ist und mindestens einen Flügel (6) aufweist, der die Greiffläche (4) der Greifvorrichtung (3) trägt und relativ zum Sockel zwischen einer Stapelstellung und einer Greifstellung beweglich ist, in welcher die Greiffläche (4) ohne Kontakt zur Haube (2) ist, wobei diese Stellungen jeweils den Zuständen der Stapelung und des Greifens der Greifvorrichtung (3) entsprechen.

3. Deckel (1) nach Anspruch 2, **dadurch gekennzeichnet, dass** jeder Flügel (6) drehbar bezüglich des Sockels (5) um eine Drehachse (7) montiert ist; die parallel zur Tangentenebene (8) der Haube (2) auf dem Niveau des Sockels (5) ist.

4. Deckel (1) nach Anspruch 3, **dadurch gekennzeichnet, dass** die Greifoberfläche (4) jedes Flügels (6) an die Haube (2) gewendet ist, wenn der Flügel (6) in seiner Stapelstellung ist.

5. Deckel (1) nach Anspruch 3 oder 4, **dadurch gekennzeichnet, dass** jeder Flügel (6) in Greifstellung in einer Ebene orientiert ist, welche mit der Tangentenebene (8) einen Winkel zwischen 30° und 60° bildet und vorzugsweise 45° beträgt.

6. Deckel (1) nach Anspruch 5, **dadurch gekennzeichnet, dass** jeder Flügel (6) bis in eine Transportstellung beweglich ist, in welcher er im wesentlichen normal zur Tangentenebene (8) steht.

7. Deckel (1) nach einem der Ansprüche 3 bis 6, **dadurch gekennzeichnet, dass** die Greifvorrichtung (3) zwei Flügel (6) aufweist, deren Drehachsen (7) zueinander parallel verlaufen.

8. Deckel (1) nach Anspruch 7 in Verbindung mit Anspruch 6, **dadurch gekennzeichnet, dass** in der Transportstellung die beiden Flügel (6) aneinander über die beiden Anschlagflächen (18) anschlagen, welche entgegengesetzt zu ihrer Greiffläche (4) sind.

9. Deckel (1) nach Anspruch 8, **dadurch gekennzeichnet, dass** der Abstand zwischen den beiden Drehachsen (7) so bemessen ist, dass die beiden Flügel (6) in ihrem Anschlagzustand aneinander nicht mehr als 10° zu jeder Seite der Normalebene (17) zur Tangentenebene (8) schwenken können.

10. Deckel (1) nach einem der Ansprüche 1 bis 9, **dadurch gekennzeichnet, dass** das elastische Mittel (14) eine Feder (14) ist.
